# EUROPÄISCHE PATENTSCHRIFT

(11) **EP 2 333 014 B1**
(45) Veröffentlichungstag und Bekanntmachung des Hinweises auf die Patenterteilung: **11.03.2015**
(21) Anmeldenummer: 10193924.7
(22) Anmeldetag: 07.12.2010
(51) Int. Cl.: C08L 69/00

(54) **Folie aus Polycarbonatzusammensetzung**
Film of polycarbonate composition
Film obtenu à partir d'une composition de polycarbonate

(30) Priorität: 12.12.2009 DE 102009058100
(43) Veröffentlichungstag der Anmeldung: 15.06.2011
(73) Patentinhaber: Bayer Intellectual Property GmbH, 40789 Monheim (DE)
(72) Erfinder: Dern, Gesa, 40223 Düsseldorf (DE); Pudleiner, Heinz, 47800 Krefeld (DE); Cassel, Tanja, 46149 Oberhausen (DE); Witzke, Carsten, 47918 Tönisvorst (DE)
(74) Vertreter: BIP Patents

(56) Entgegenhaltungen:
- EP-A2- 0 722 984
- WO-A1-2006/001570

## Beschreibung

Gegenstand der Erfindung ist eine Folie aus Polycarbonatzusammensetzung enthaltend wenigstens ein hochtemperaturbeständiges (Co)Polycarbonat und wenigstens ein Ethylen-Alkylacrylat-BlockCopolymer. Weiterer Gegenstand dieser Anmeldung ist die Verwendung der Folien im Elektrosektor und für Autositze. Diese Polycarbonat-Zusammensetzung zeichnet sich dadurch aus, dass bei hoher Temperaturbeständigkeit gleichzeitig die Wechselbiegefestigkeit der aus den resultierenden Material hergestellten Folien verbessert wird.

In Autositzen werden Folien eingesetzt, über die die Auslösung des Airbags gesteuert wird: In Abhängigkeit vom Gewicht der Person und der Sitzposition wird der Airbag selektiv ausgelöst. Diese Folien müssen hochtemperaturstabil sein, damit bei der Bedruckung mit elektrisch leitfähigen Pasten möglichst hohe Trocknungstemperaturen angewandt werden können. Wegen der Biegebeanspruchung in der Sitzfläche muss die Folie zudem besondere Anforderungen an die Knickbeständigkeit (Wechselbiegefestigkeit, bestimmbar über die Doppelfalzzahl nach Schopper nach ISO 5625) erfüllen.

Die Verwendungen von hochtemperaturbeständigem Polycarbonat als Basismaterial von Folien ist bekannt. Diese Produkte, unter anderem erhältlich als Bayfol® 1202 der Firma Bayer MaterialScience AG, werden zum Beispiel eingesetzt in Lautsprechermembranen.

Diese Folien sind für die oben beschriebene Anwendung aufgrund ihrer hohen Temperaturbeständigkeit sehr gut geeignet, allerdings reicht die Knickbeständigkeit der Produkte nicht aus.

Eine Verbesserung der mechanischen Eigenschaften von Polymeren durch Zugabe von Elastomeren ist an sich bekannt.

Beispielsweise beschreibt WO 2006/01570 A1 die Mischungen von Polycarbonaten und 0,1-50 Gew.% der Ethylen-Alkylacrylat-Copolymere. Das so erhaltene Material hat eine hohe Schlagzähigkeit in Verbindung mit einer hohen Fließfähigkeit bei gleichzeitiger Beibehaltung der sonstigen Eigenschaften. Allerdings offenbart diese Schrift keine hochtemperaturbeständige Polycarbonate, die wesentlich für die angestrebten Anwendungen sind. Einen Hinweis auf Verbesserung der Doppelfalzzahlen findet sich nicht in dieser Offenlegung.

WO 2005/042638 A1 beschreibt die Verbesserung von Polycarbonat / ABS-Blends durch die Zugabe von Modifiem in der zwingenden Kombination von Ethylen-Alkylacrylat Copolymer mit Ethylen/Butylacrylat/Glycidyl Methacrylat Terpolymer. Auch hier offenbart diese Schrift keine hochtemperaturbeständige Polycarbonate in der erfindungsgemäßen Zusammensetzung.

In EP 362 646 A2 sind Zusammensetzungen von hochwärmeformbeständigen Polycarbonaten mit Elastomeren beschrieben. Verbesserte Eigenschaften hinsichtlich Doppelfalzzahlen sind dagegen nicht beschrieben. Diese Offenlegungsschrift gibt aber keinen Hinweis darauf, dass der spezielle Modifier in der erfindungsgemäßen Anmeldung zum gewünschten Ziel führt.

DE 40 09 759 A1 beschreibt die Mischung von Polypropylen mit hochwärmebeständigen Polycarbonaten als Weg, besser verträgliche Mischungen herzustellen.

EP 722 984 A2 beschreibt Mischungen aus hochtemperaturbeständigem Polycarbonat und Terpolymeren aus Ethylen, Acrylaten und epoxyfunktionalisierten Monomeren. Effekt ist hier eine Steigerung der Spannungsrissbeständigkeit und Schlagzähigkeit des Polycarbonats unter Beibehaltung der Wärmeformbeständigkeit. Die vorliegende Anmeldung betrifft jedoch Zusammensetzungen anderer Natur.

Ausgehend vom Stand der Technik stellte sich somit die Aufgabe, Zusammensetzungen aus Polycarbonaten, die eine hohe Wärmeformbeständigkeit aufweisen, zu entwickeln, welche eine verbesserte Wechselbiegefestigkeit aufweisen.

Es wurde nun überraschenderweise herausgefunden, dass der Zusatz von elastomeren Modifiem (elastomeren Block-Copolymeren mit Ethylen als eines der Monomere) zum hochtemperaturbeständigen Polycarbonat die Doppelfalzzahl verbessert, ohne die Wärmeformbeständigkeit nennenswert herabzusetzen (Vicat-Erweichungstemperaturen >165°C).

Nur durch Zusatz von Ethylen-Alkylacrylat-Block-Copolymeren konnten die hohen Anforderungen an die Temperaturbeständigkeit erfüllt werden und die Wechselbiegefestigkeit der aus den resultierenden Material hergestellten Folien verbessert werden.

Bei der Bestimmung der Knickfestigkeit zur Ermittlung der Doppelfalzzahl nach Schopper an Folien unterschiedlicher Dicke zeigte sich, dass die Verbesserung der Kerbschlagzähigkeit nicht mit einer Verbesserung der Knickfestigkeit korreliert.

Gegenstand der vorliegenden Erfmdung ist daher eine Folie aus Polycarbonatzusammensetzung enthaltend
A) 82 - 99,5 Gew-%, bevorzugt 85 - 99Gew.-%, besonders bevorzugt 89 - 99 Gew.-% (jeweils bezogen auf die Summe der Gewichtsteile der Komponenten A+B) wenigstens eines hochwärmeformbeständiges Polycarbonats auf Basis von einem oder mehreren cycloaliphatischen Bisphenolen der Formel 1, 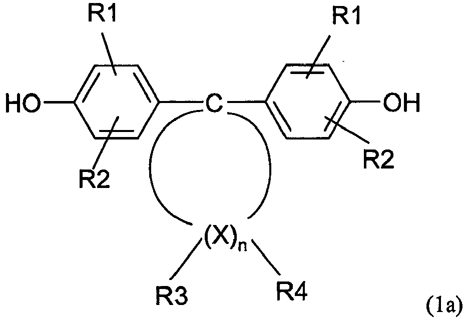 worin
   R1 und R2 unabhängig voneinander Wasserstoff, Halogen, bevorzugt Chlor oder Brom, C1-C8-alkyl, C5-C6 -cycloalkyl, Phenyl, C7-C12 Aralkyl, insbesondere für Methyl, Phenyl oder H und insbesondere für H bedeuten,
   n eine ganze Zahl von 4 - 7, bevorzugt 4 oder 5 ist,
   R3 und R4 für jedes X individuell wählbar sind und unabhängig voneinander Wasserstoff oder C1-C6-Alkyl bedeuten und
   X Kohlenstoff bedeutet,
   mit der Maßgabe, dass an mindestens einem Atom X R3 und R4 gleichzeitig Alkyl, bevorzugt Methyl bedeuteten;
   insbesondere bevorzugt sind Copolycarbonate aus Bisphenol A und Bisphenol TMC,
      und
B) 0,5-18 Gew-%, bevorzugt 1- 15 Gew-%, insbesondere bevorzugt 1 - 11 Gew-%, ganz besonders bevorzugt 1 - 10 Gew.-% (jeweils bezogen auf die Summe der Gewichtsteile der Komponenten A+B) wenigstens eines Ethylen-Alkylacrylat-Block-Copolymers.
C) gegebenenfalls 0 bis 5 Gew.-Teile, bevorzugt 0 bis 2 Gew.-Teile, besonders bevorzugt 0 bis 1 Gew.-Teile (jeweils bezogen auf die Summe der Gewichtsteile der Komponenten A+B) Zusatzstoffe.

### Komponente A

Geeignete Polycarbonate sind bevorzugt hochmolekulare, thermoplastische, aromatische Polycarbonate mit M_{w} (Gewichtsmittel des Molekulargewichts) von mindestens 10 000 g/mol, vorzugsweise von 20 000 bis 300 000 g/mol, die bifunktionelle Carbonatstruktureinheiten der Formel (1) enthalten, 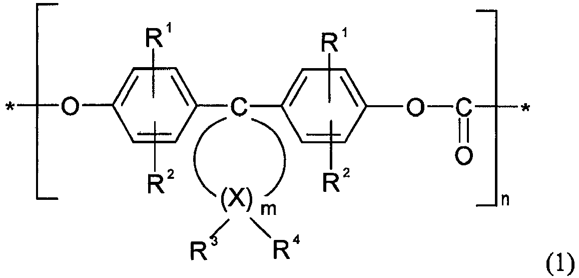 worin
- R¹ und R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴: für jedes X individuell wählbar, unabhängig voneinander Wasserstoff oder C₁-C₆-Alkyl und
- X: Kohlenstoff bedeuten,
mit der Maßgabe, dass an mindestens einem Atom X, R³ und R⁴ gleichzeitig Alkyl bedeuten.

Ausgangsprodukte für die Polycarbonate sind Dihydroxydiphenylcycloalkane der Formel (1a) 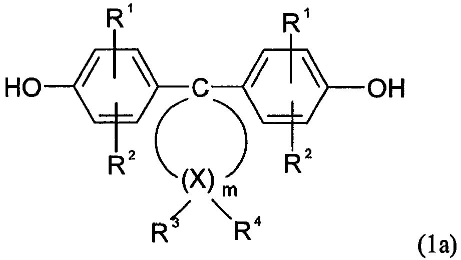 worin
X, R¹, R², R³, R⁴ und m die für die Formel (I) genannte Bedeutung haben.

Bevorzugt sind an 1-2 Atomen X, insbesondere nur an einem Atom X, R³ und R⁴ gleichzeitig Alkyl.

Bevorzugter Alkylrest ist Methyl; die X-Atome in alpha -Stellung zu dem Diphenylsubstituierten C-Atom (C-1) sind bevorzugt nicht dialkylsubstituiert, dagegen ist die Alkyldisubstitution in beta - Stellung zu C-1 bevorzugt.

Bevorzugt sind Dihydroxydiphenylcycloalkane mit 5 und 6 Ring-C-Atomen im cycloaliphatischen Rest (m = 4 oder 5 in Formel (1a)), beispielsweise die Diphenole der Formeln (1b) bis (1d), 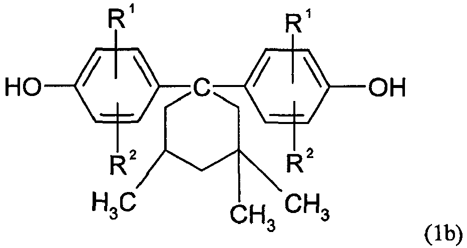 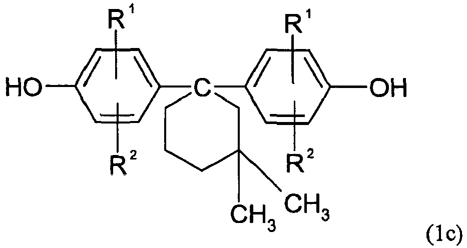 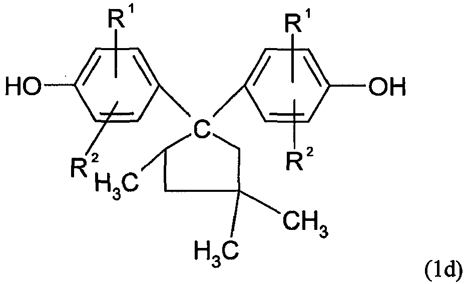 wobei das 1,1-Bis-(4-hydroxyphenyl)-3,3,5-trimethylcyclohexan (Formel (1b) mit R¹ und R² gleich H) besonders bevorzugt ist. Die Polycarbonate können gemäss der deutschen Patentanmeldung DE 3 832 396 A1 aus Diphenolen der Formel (1a) hergestellt werden.

Es können sowohl ein Diphenol der Formel (1a) unter Bildung von Homopolycarbonaten als auch mehrere Diphenole der Formel (1a) unter Bildung von Copolycarbonaten verwendet werden.

Ausserdem können die Diphenole der Formel (1a) auch im Gemisch mit anderen Diphenolen, beispielsweise mit denen der Formel (2)

HO-Z-OH (2),

zur Herstellung von hochmolekularen, thermoplastischen, aromatischen Polycarbonaten verwendet werden.

Geeignete andere Diphenole der Formel (2) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (1a) oder Heteroatome als Brückenglieder enthalten kann.

Beispiele der Diphenole der Formel (2) sind:
Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha , alpha '-Bis-(hydroxyphenyl)-diisopropylbenzole sowie deren kernalkylierte und kernhalogenierte Verbindungen.

Diese und weitere geeignete Diphenole sind z.B. in den US-A 3 028 365, 2 999 835, 3 148 172, 3 275 601, 2 991 273, 3 271 367, 3 062 781, 2 970 131 und 2 999 846, in den DE-A 1 570 703, 2 063 050, 2 063 052, 2 211 956, der FR-A 1 561 518 und in der Monographie "H. Schnell, Chemistry and Physics of Polycarbonates, Interscience Publishers, New York 1964", beschrieben.

Bevorzugte andere Diphenole sind beispielsweise:
4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, alpha , alpha -Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, alpha , alpha -Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (2) sind beispielsweise:
2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Insbesondere ist 2,2-Bis-(4-hydroxyphenyl)-propan bevorzugt. Die anderen Diphenole können sowohl einzeln als auch im Gemisch eingesetzt werden.

Das molare Verhältnis von Diphenolen der Formel (1a) zu den gegebenenfalls mitzuverwendenden anderen Diphenolen der Formel (2), soll zwischen 100 Mol-% (1a) zu 0 Mol-% (2) und 2 Mol-% (1a) zu 98 Mol-% (2), vorzugsweise zwischen 100 Mol-% (1a) zu 0 Mol-% (2) und 10 Mol-% (1a) zu 90 Mol-% (2) und insbesondere zwischen 100 Mol-% (1a) zu 0 Mol-% (2) und 30 Mol-% (1a) zu 70 Mol-% (2) liegen.

Die hochmolekularen Polycarbonate aus den Diphenolen der Formel (1a), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein.

Die Polycarbonate können in an sich bekannter Weise verzweigt sein. Wenn die Verzweigung gewünscht wird, kann sich in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind:
Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5-methyl-benzyl)-4-methylphenol, 2-(4-Hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate dienen monofunktionelle Verbindungen in üblichen Konzentraten. Geeignete Verbindungen sind z.B. Phenol, tert.-Butylphenole oder andere Alkyl-substituierte Phenole. Zur Regelung des Molekulargewichts sind insbesondere kleine Mengen Phenole der Formel (3) geeignet 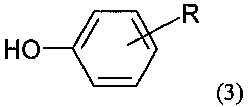 worin
R einen verzweigten C₈- und/oder C₉-Alkylrest darstellt.

Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonate können vorzugsweise nach dem Phasengrenzflächenverfahren (vgl. H. Schnell "Chemistry and Physics of Polycarbonates", Polymer Reviews, Vol. IX, Seite 33ff., Interscience Publ. 1964) in an sich bekannter Weise hergestellt werden.

Hierbei werden die Diphenole der Formel (1a) in wässrig alkalischer Phase gelöst. Zur Herstellung von Copolycarbonaten mit anderen Diphenolen werden Gemische von Diphenolen der Formel (1a) und den anderen Diphenolen, beispielsweise denen der Formel (2), eingesetzt. Zur Regulierung des Molekulargewichts können Kettenabbrecher z.B. der Formel (3) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2,0 Mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (1a) und gegebenenfalls anderen Diphenolen (1a) können auch deren Mono- und/oder Bischlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (1a) und gegebenenfalls Formel (2); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dienen beispielsweise Methylenchlorid, Chlorbenzol sowie Mischungen aus Methylenchlorid und Chlorbenzol.

Als wässrige alkalische Phase dient beispielsweise NaOH-Lösung. Die Herstellung der Polycarbonate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden.

Die Polycarbonate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Beim alternativen Schmelzumesterungsverfahren werden die bereits beim Phasengrenzflächenverfahren beschriebenen aromatischen Dihydroxyverbindungen mit Kohlensäurediestern unter Zuhilfenahme von geeigneten Katalysatoren und gegebenenfalls weiteren Zusatzstoffen in der Schmelze umgeestert.

Kohlensäurediester im Sinne der Erfindung sind solche der Formel (4) und (5) 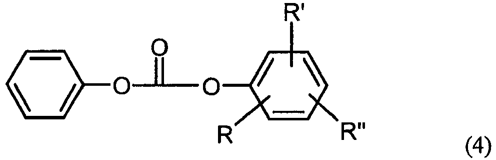 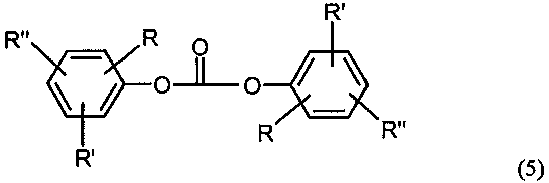 wobei
R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können,
beispielsweise
Diphenylcarbonat, Butylphenyl-phenylcarbonat, Di-Butylphenylcarbonat, Isobutylphenylphenylcarbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenyl-phenylcarbonat, Di-(n-Hexylphenyl)carbonat, Cyclohexylphenyl-phenylcarbonat, Di-Cyclohexylphenylcarbonat, Phenylphenol-phenylcarbonat, Di-Phenylphenolcarbonat, Isooctylphenyl-phenylcarbonat, Di-Isooctylphenylcarbonat, n-Nonylphenyl-phenylcarbonat, Di-(n-Nonylphenyl)-carbonat, Cumylphenylphenylcarbonat, Di-Cumylphenylcarbonat, Naphthylphenyl-phenylcarbonat, Di-Naphthylphenylcarbonat, Di-tert-Butylphenyl-phenylcarbonat, Di-(Di-tert-Butylphenyl)carbonat, Dicumylphenylphenylcarbonat, Di-(Dicumylphenyl)carbonat, 4-Phenoxyphenylphenylcarbonat, Di-(4-Phenoxyphenyl)carbonat, 3-Pentadecylphenyl-phenylcarbonat, Di-(3-Pentadecylphenyl)carbonat, Tritylphenyl-phenylcarbonat, Di-Tritylphenylcarbonat,
bevorzugt Diphenylcarbonat, tert-Butylphenyl-phenylcarbonat, Di-tert-Butylphenylcarbonat, Phenylphenol-phenylcarbonat, Di-Phenylphenolcarbonat, Cumylphenyl-phenylcarbonat, Di-Cumylphenylcarbonat, besonders bevorzugt Diphenylcarbonat.

Es können auch Mischungen der genannten Kohlensäurediester eingesetzt werden.

Der Anteil an Kohlensäureester beträgt 100 bis 130 mol-%, bevorzugt 103 bis 120 mol-%, besonders bevorzugt 103 bis 109 mol-%, bezogen auf die Dihydroxyverbindung.

Als Katalysatoren im Sinne der Erfindung werden im Schmelzumesterungsverfahren wie in der genannten Literatur beschrieben basische Katalysatoren wie beispielsweise Alkali- und Erdalkalihydroxide und -oxide aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt. Phosphoniumsalze im Sinne der Erfindung sind solche der folgenden allgemeinen Formel (6) 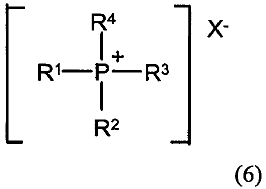 wobei
- R¹⁻⁴: dieselben oder verschiedene C₁-C₁₀-Alkyle, C₆-C₁₀-Aryle, C₇-C₁₀-Aralkyle oder C₅-C₆-Cycloalkyle sein können, bevorzugt Methyl oder C₆-C₁₄-Aryle, besonders bevorzugt Methyl oder Phenyl, und
- X⁻: ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆-C₁₄-Aryl oder C₇-C₁₂-Aralkyl, bevorzugt Phenyl, sein kann. Bevorzugte Katalysatoren sind

Tetraphenylphosphoniumchlorid, Tetraphenylphosphoniumhydroxid, Tetraphenylphosphoniumphenolat, besonders bevorzugt Tetraphenylphosphoniumphenolat.

Die Katalysatoren werden bevorzugt in Mengen von 10⁻⁸ bis 10⁻³ mol, bezogen auf ein mol Diphenol, besonders bevorzugt in Mengen von 10⁻⁷ bis 10⁻⁴ mol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid und Natriumphenolat. Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.

Die Umesterungsreaktion der aromatischen Dihydroxyverbindung und des Kohlensäurediester in der Schmelze wird bevorzugt in zwei Stufen durchgeführt. In der ersten Stufe findet das Aufschmelzen der aromatischen Dihydroxyverbindung und des Kohlensäurediester bei Temperaturen von 80 - 250°C, bevorzugt 100 - 230°C, besonders bevorzugt 120 - 190°C unter normalem Druck in 0 - 5 Stunden, bevorzugt 0,25 - 3 Stunden statt. Nach Zugabe des Katalysators wird durch Anlegen von Vakuum (bis zu 2 mm Hg) und Erhöhung der Temperatur (auf bis zu 260°C) durch Abdestillieren des Monophenols das Oligocarbonat aus der aromatischen Dihydroxyverbindung und dem Kohlensäurediester hergestellt. Hierbei fällt die Hauptmenge an Brüden aus dem Prozess an. Das so hergestellte Oligocarbonat hat eine mittlere Gewichtsmolmasse M_{w} (ermittelt durch Messung der rel. Lösungsviskosität in Dichlormethan oder in Mischungen gleicher Gewichtsmengen Phenol/o-Dichlorbenzol geeicht durch Lichtstreuung) im Bereich von 2000 g/mol bis 18 000 g/mol, bevorzugt von 4 000 g/mol bis 15 000 g/mol.

In der zweiten Stufe wird bei der Polykondensation durch weiteres Erhöhen der Temperatur auf 250 - 320°C, bevorzugt 270 - 295°C und bei einem Druck von <2 mm Hg das Polycarbonat hergestellt. Hierbei wird der Rest an Brüden aus dem Prozess entfernt.

Die Katalysatoren können auch in Kombination (zwei oder mehrere) miteinander eingesetzt werden.

Beim Einsatz von Alkali-/ Erdalkalimetallkatalysatoren kann es vorteilhaft sein, die Alkali-/ Erdalkalimetallkatalysatoren zu einem späteren Zeitpunkt (z. B. nach der Oligocarbonatsynthese bei der Polykondensation in der zweiten Stufe) zuzusetzen.

Die Reaktion der aromatischen Dihydroxyverbindung und des Kohlensäurediester zum Polycarbonat kann im Sinne des Verfahrens diskontinuierlich oder bevorzugt kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren.

Analog des Phasengrenzflächenverfahrens können durch Einsatz mehrfunktioneller Verbindungen verzweigte Poly- oder Copolycarbonate hergestellt werden.

Die Polycarbonate haben bevorzugt Molekulargewicht M_{w} (Gewichtsmittel, ermittelt durch Gelchromatographie nach vorheriger Eichung) von mindestens 10 000 g/mol, besonders bevorzugt von 20 000 g/mol bis 300 000 g/mol und insbesondere von 20 000 g/mol bis 80 000 g/mol. Sie können linear oder verzweigt sein, sie sind Homopolycarbonate oder Copolycarbonate auf Basis der Diphenole der Formel (1a).

Durch den Einbau der Diphenole der Formel (1a) sind neue Polycarbonate mit hoher Wärmeformbeständigkeit entstanden, die auch sonst ein gutes Eigenschaftsbild haben. Dies gilt insbesondere für die Polycarbonate auf Basis der Diphenole der Formel (1a), in denen m 4 oder 5 ist und ganz besonders für die Polycarbonate auf Basis der Diphenole (1b), worin R¹ und R² unabhängig voneinander die für die Formel (1a) genannte Bedeutung haben und besonders bevorzugt Wasserstoff sind.

Die besonders bevorzugten Polycarbonate sind also solche aus Einheiten der Formel (1') 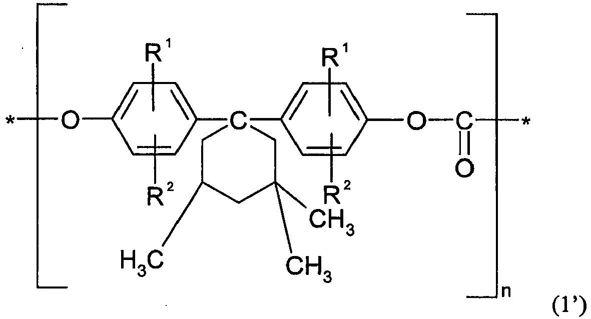 worin R¹ und R² die für Formel (1a) genannte Bedeutung haben, besonders bevorzugt aber Wasserstoff sind.

Diese Polycarbonate auf Basis der Diphenole der Formel (1b), worin insbesondere R¹ und R² Wasserstoff sind, besitzen zur hohen Wärmeformbeständigkeit ein gutes Fliessverhalten in der Schmelze, was nicht zu erwarten war, und zeigen sehr gute Löslichkeit in den unten genannten halogenfreien Lösungsmitteln.

Durch die beliebige Komposition mit anderen Diphenolen, insbesondere mit denen der Formel (2) lassen sich zudem die Polycarbonateigenschaften in günstiger Weise variieren. In solchen Copolycarbonaten sind die Diphenole der Formel (1a) in Mengen von 100 Mol-% bis 2 Mol-%, vorzugsweise in Mengen von 100 Mol-% bis 10 Mol-% und insbesondere in Mengen von 100 Mol-% bis 30 Mol-%, bezogen auf die Gesamtmenge von 100 Mol-% an Diphenoleinheiten, in Polycarbonaten enthalten.

### Komponente B

Die Ethylen-Alkyl(meth)acrylat-Block-Copolymere können durch die allgemeine Formel (4) beschrieben werden: 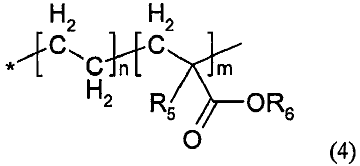
R₅ kann sein Methyl oder Wasserstoff,
R₆ kann sein Wasserstoff oder C₁ bis C₁₂ Alkylrest,
n und m sind Polymerisationsgrade.

R₆ ist bevorzugt Methyl, Ethyl, Propyl, Isopropyl, Butyl, sec-Butyl, tert-Butyl, Isobutyl, Hexyl, Isoamyl, oder tert-Amyl.

Die Verhältnisse der Polymerisationsgrade n und m liegen bevorzugt im Bereich von n:m=1:300-90:10.

Das Ethylen-Alkyl(meth)acrylat-Copolymer kann ein random- Block- oder Multiblock-Copolymer sein oder Mischungen aus diesen Strukturen.

Der Schmelzflußindex des Ethylen-Alkyl(meth)acrylat-Copolymer (gemessen bei 190°C bei 2.16kg Belastung) liegt bevorzugt im Bereich von 0.01-40 g/(10 Min.), besonders bevorzugt im Bereich von 0.1 - 10 g/(10 Min.).

### Komponente C

Den Zusammensetzungen können noch die für diese Thermoplasten üblichen Additive wie Füllstoffe, UV-Stabilisatoren, IR-Stabilisatoren, Thermostabilisatoren, Antistatika und Pigmente, Farbmittel in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z. B. Alkyl- und Arylphosphite, -phosphate, -phosphane, niedermolekulare Carbonsäureester, Halogenverbindungen, Salze, Kreide, Quarzmehl, Glas- und Kohlenstofffasern, Pigmente und deren Kombination. Solche Verbindungen werden z. B. in WO 99/55772, S. 15 - 25, und in "Plastics Additives", R. Gächter und H. Müller, Hanser Publishers 1983, beschrieben).

Geeignete Additive sind beispielsweise beschrieben in "Additives for Plastics Handbook, John Murphy, Elsevier, Oxford 1999", im "Plastics Additives Handbook, Hans Zweifel, Hanser, München 2001".

Geeignete Antioxidantien bzw. Thermostabilisatoren sind beispielsweise:
Alkylierte Monophenole, Alkylthiomethylphenole, Hydrochinone und alkylierte Hydrochinone, Tocopherole, hydroxylierte Thiodiphenylether, Alkylidenbisphenole, O-, N- und S-Benzylverbindungen, hydroxybenzylierte Malonate, aromatische Hydroxybenzylverbindungen, Triazinverbindungen, Acylaminophenole, Ester von β-(3,5-Di-tert-butyl-4-hydroxyphenyl)propionsäure, Ester von β-(5-tert-Butyl-4-hydroxy-3-methylphenyl)propionsäure, Ester von β-(3,5-Dicyclohexyl-4-hydroxyphenyl)propionsäure, Ester von 3,5-Di-tert-butyl-4-hydroxyphenylessigsäure, Amide of β-(3,5-Di-tert-butyl-4-hydroxyphenyl)propionsäure, geeignete Thiosynergisten, sekundäre Antioxidantien, Phosphite und Phosphonite, Benzofuranone und Indolinone.

Bevorzugt sind organische Phosphite, Phosphonate und Phosphane, meist solche bei denen die organischen Reste völlig oder teilweise aus gegebenenfalls substituierten aromatischen Resten bestehen.

Als Komplexierungsmittel für Schwermetalle und zur Neutralisation von Alkalispuren sind o/m Phosphorsäuren, ganz oder teilweise veresterte Phosphate oder Phosphite geeignet.

Als Lichtschutzmittel (UV-Absorber) sind geeignet 2-(2'-Hydroxyphenyl)benzotriazole, 2-Hydroxybenzophenone, Ester von substituierten und unsubstituierten Benzoesäuren, Acrylate, Sterisch gehinderte Amine, Oxamide sowie 2-(Hydroxyphenyl)-1,3,5-triazine bzw substituierte Hydroxyalkoxyphenyl, 1,3,5-Triazole, bevorzugt sind substituierte Benzotriazole wie z.B. 2-(2'-hydroxy-5'-methyl-phenyl)-benzotriazole, 2-(2'-Hydroxy-3',5'-di-t-butyl-phenyl)benzotriazole, 2-(2'-hydroxy-3'-tert.-butyl-5'-methyl-phenyl)-5-chlorobenzotriazole, 2-(2'-Hydroxy-3',5'-tert.-butylphenyl)-5-chlorobenzotriazole, 2-(2'-Hydroxy-5'-tert.-octylphenyl)benzotriazole, 2-(2'-Hydroxy-3',5'-di-tert.-amylphenyl)benzotriazole, 2-[2'-Hydroxy-3'-(3",4",5",6"-tetrahydrophthalimido-ethyl)-5'-methylphenyl]-benzotriazole and 2,2'-Methylenebis[4-(1,1,3,3-tetramethylbutyl)-6-(2H-benzotriazol-2-yl)phenol].

Polypropylenglykole allein oder in Kombination mit z. B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polymer zugesetzt werden.

Außerdem können Verarbeitungshilfsmittel wie Entformungsmittel, meist Derivate langkettiger Fettsäuren, zugesetzt werden. Bevorzugt sind z. B. Pentaerythrittetrastearat und Glycerinmonostearat. Sie werden allein oder im Gemisch vorzugsweise in einer Menge von 0,01 bis 1 Gew.-%, bezogen auf die Masse der Zusammensetzung eingesetzt.

Geeignete flammhemmende Additive sind Phosphatester, d. h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Des weiteren können Farbmittel, wie organische Farbstoffe oder Pigmente oder anorganische Pigmente, IR-Absorber, einzeln, im Gemisch oder auch in Kombination mit Stabilisatoren, Glasfasern, Glas(hohl)kugeln, anorganischen Füllstoffen zugesetzt werden.

### Herstellung der Formmassen und Formkörper

Die thermoplastischen Formmassen werden hergestellt, indem man die jeweiligen Bestandteile in bekannter Weise vermischt und bevorzugt bei Temperaturen von 240°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Folien können z.B. hergestellt werden über das Aufschmelzen der Formmassen in geeigneten Aggregaten (z.B. Doppelwellenextruder) und in Form bringen der Schmelze durch geeignete Düsen.

Abmischung mit Aufgrund ihres Eigenschaftsprofils eignen sich die Polycarbonate und Copolycarbonate als Folien im Elektrosektor und als Folien für Autositze.

### Beispiele

### Compoundierung:

Die Einrichtung zur Compoundierung besteht aus:
Compoundierung A:
   - einer Dosiereinrichtung für die Komponenten,
   - einem gleichlaufenden Zweiwellenkneter der Firma Berstorff mit einem Schneckendurchmesser von 25mm (ZE 25/5),
   - einer Lochdüse zur Ausformung von Schmelzesträngen,
   - einem Wasserbad zur Abkühlung und dem Verfestigen der Stränge,
   - einem Granulator.
Compoundierung B:
   - einer Dosiereinrichtung für die Komponenten,
   - einem gleichlaufenden Zweiwellenkneter der Firma Clextral mit einem Schneckendurchmesser von 32mm (EV 32),
   - einer Lochdüse zur Ausformung von Schmelzesträngen (6 Löcher ä 3,2mm),
   - einem Wasserbad zur Abkühlung und dem Verfestigen der Stränge,
   - einem Granulator.

Mit Hilfe der oben beschriebenen Compoundiereinrichtungen wurden - soweit Zusammensetzungen betroffen sind - die unten genannten Mischungen hergestellt.

### Spritzguß:

Zur Untersuchung der mechanischen Eigenschaften wurden die in den entsprechenden Normen geforderten Prüfkörper im Spritzguß angefertigt. Das jeweilige Granulat wurde vor Verarbeitung für 5 Stunden im Vakuumtrockenschrank bei 120 °C getrocknet. Die Massetemperatur im Spritzguß betrug 330 °C und die Werkzeugtemperatur 120 °C.

### Folien-Extrusion

### Folienextrusion A:

Aus den Materialien wurden Folien mit einer Dicke von 100 µm extrudiert. Hierzu wurde eine Folienextrusionsmaschine der Firma Kuhne verwendet und das Material bei einer Schmelzetemperatur von 290 °C verarbeitet (Kuhne 37, "chill roll").

### Folienextrusion B:

Aus den Materialien wurden Folien mit der Dicke von 250 µm extrudiert. Hierzu wurde eine Folienextrusionsmaschine der Firma Breyer verwendet und das Material bei einer Schmelzetemperatur von 300 °C verarbeitet.

Die verwendete Anlage besteht aus
- einem Extruder mit einer Schnecke von 105 mm Durchmesser (D) und einer Länge von 41xD. Die Schnecke weist eine Entgasungszone auf;
- einen Coextruder zum Aufbringen der Deckschicht mit einer Schnecke der Länge 25 D und einem Durchmesser von 35 mm
- einem Umlenkkopf;
- eine speziellen Coextrusions-Breitschlitzdüse mit 1500 mm Breite;
- einem Dreiwalzen-Glättkalander mit horizontaler Walzenanordnung, wobei die dritte Walze um +/- 45° gegenüber der Horizontalen schwenkbar ist;
- einer Rollenbahn;
- einer Einrichtung zum beidseitigen Aufbringen von Schutzfolie;
- einer Abzugseinrichtung;
- Aufwickelstation.

Das Granulat des Basismaterials wurde dem Fülltrichter des Extruders zugeführt. Im jeweiligen Plastifiziersystem Zylinder/Schnecke erfolgte das Aufschmelzen und Fördern des jeweiligen Materials. Von der Düse gelangt die Schmelze auf den Glättkalander, dessen Walzen die in der Tabelle 1 genannte Temperatur aufweisen. Auf dem Glättkalander erfolgt die endgültige Formgebung und Abkühlung des Materials. Anschließend wird die Folie durch einen Abzug transportiert, es wird die Schutzfolie beidseitig aufgebracht, danach erfolgt die Aufwicklung der Folie.

**Tabelle 1**

| | |
|---|---|
| Verfahrensparameter | Folienextrusion 2 |
| | Hauptextruder |
| Massetemperatur | 300°C |
| Temperatur Umlenkkopf | 285°C |
| Temperatur Düse/Z1 | 305°C |
| | |
| Drehzahl Extruder | 45 min⁻¹ |
| | |
| Temperatur Walze 1 (Gummi-Walze) | 24°C |
| Temperatur Walze 2 | 72°C |
| | |
| Kalandergeschwindigkeit | 21,5 m/min. |

### Mechanische Tests:

Die Schmelze-Massenfließrate, Melt Flow Rate (MFR), der Polymere und Polymerzusammensetzungen wurde nach ISO 1133, ASTM D1238, der Schmelzpunkt nach ISO 3146, ASTM D3418, bestimmt.

Die Temperaturbeständigkeit der hergestellten Materialien wird über die Bestimmung der Vicat-Erweichungstemperatur nach ISO 306 geprüft.

Bei der Bestimmung der Vicat-Erweichungs-Temperatur wird der Kunststoff-Probekörper (80x10x4mm) in eine Halterung eingespannt. Eine plane Eindringspitze mit 1mm² Querschnitt und definierter Auflagekraft wird aufgesetzt. Durch die Gewährleistung der optimalen Temperaturübertragung auf die Probe und gleichmäßig steigender Aufheizrate wird die Temperatur bestimmt, bei der die Eindringspitze 1mm tief in die Oberfläche des Kunststoff-Probekörpers eingedrungen ist. Diese entspricht der Vicat-Erweichungs-temperatur nach ISO 306.

Die mechanischen Eigenschaften werden exemplarisch an der Kerbschlagzähigkeit getestet, die Tests erfolgen nach ISO 179/1eA bei 23°C und bei -30°C.

Hierzu wird ein Prüfkörper (80x10x4) mit einer Normkerbe (V-förmig, Kerbradius 0,25mm) versehen und an zwei Seiten gelagert (Stützweite 62mm). Ein Schlagpendel trifft in der Mitte des Prüfkörpers auf Höhe der Kerbe auf. Die Prüfanlage besteht aus einem Pendelschlagwerk mit definiertem Arbeitsvermögen und definierter Auftreffgeschwindigkeit.

Die Wechselbiegefestigkeit wurde über die Doppelfalzzahl nach Schopper bewertet. Hierzu wird die Doppelfalzzahl nach (ISO 5625) bei Normklima (23°C, 50% rel. Luftfeuchte) ermittelt.

Ein Doppelfalz ist eine vollständige Bewegung des Prüfstreifens in beide Seiten entlang einer Falzlinie. Die Doppelfalzzahl ist die Anzahl Doppelfalzungen, die nötig sind, um einen Prüfstreifen unter genormter Belastung und Klimabedingungen zum Reißen zu bringen.

### Materialien

- hochwärmeformbeständiges Polycarbonat: Hier wurde ein Colpolycarbonat bestehend aus Bisphenol A und Trimethylcyclohexyl-Bisphenol (Apec® 1800 der Firma Bayer MaterialScience AG, Leverkusen) mit einer Wärmeformbeständigkeit HDT A von 159 C und HDT B von 174 C (gemessen nach ISO 75-1, -2) und einer Schmelze-Volumenfließrate von 10 ml/(10 Min.), gemessen nach ISO 1133, verwendet.
- Ethylen-Acrylat-Copolymere: Hier wurden Block-Copolymere der Firma DuPont de Nemours (Deutschland) GmbH, Bad Homburg verwendet. Die genaueren Beschreibungen der verwendeten Typen sind unten stehender Tabelle zu entnehmen.

**Tabelle 2: Übersicht der verwendeten Ethylen-Alkylacrylat-Copolymere**

| Beispiel | Elvaloy Typ | Acrylat | Anteil Acrylat * [%] | MFR [g/(10 Min.)] | Schmelzpunkt [°C] |
|---|---|---|---|---|---|
| 1 | 1820 AC | Methylacrylat | 20 | 8,0 | 92 |
| 2 | 3135 EAC | Butylacrylat | 35 | 1,5 | 90 |
| 3 | 34035 EAC | Butylacrylat | 35 | 40,0 | 90 |
| 4 | 3427 AC | Butylacrylat | 27 | 4 | 94 |

| | | | | | |
|---|---|---|---|---|---|
| * laut Datenblatt DuPont de Nemours | | | | | |

Ferner wurde zu Vergleichszwecken (Vergleichsbeispiel 1) ein lineares Dreiblock-Copolymer (Styrol, Ethylen, Butadien) mit einem Anteil an gebundenem Styrol von 30-33% (Angabe des Herstellers, BMS 0407) und einer Lösungsviskosität von 1,5 Pa s (Angabe des Herstellers, BMS 0380) sowie einer spezifischen Dichte von 0,91 (nach ISO 2781), erhältlich zum Beispiel unter den Handelsnamen "Kraton 1651 G" bei der Firma Kraton Polymers LLC, Houston Texas, verwendet.

Vergleichsbeispiel 2 entspricht einem Colpolycarbonat bestehend aus Bisphenol A und Trimethylcyclohexyl-Bisphenol (Apec® 1800, Fa. Bayer MaterialScience, Leverkusen) ohne Elastomeradditiv.

Über Compoundierung in den oben beschriebenen Anlagen wurden Mischungen der hochtemperaturstabilen Polycarbonate mit den elastomeren Copolymeren nach in Tabelle 3 stehenden Zusammensetzungen angefertigt.

**Tabelle 3: Rezepturen und Eigenschaften der Beispiele und Vergleichsbeispiele**

| | Gehalt Elastomer [%] | Elastomer | Vicat [°C] | Kerbschlagzähigkeit (Bruchverhalten) bei 23°C [kJ/m²] | Kerbschlagzähigkeit (Bruchverhalten) bei -30°C [kJ/m²] |
|---|---|---|---|---|---|
| Beispiel 1 | 10 | Elvaloy 1820 AC | 170 | 54 (zäh) | 18 (spröde) |
| Beispiel 2 | 10 | Elvaloy 3135 EAC | 169 | 51 (zäh) | 19 (spröde) |
| Beispiel 3 | 10 | Elvaloy 34035 EAC | 167 | 41 (zäh) | 14 (spröde) |
| Beispiel 4 | 10 | Elvaloy 3427 AC | 173 | 39 (zäh) | 17 (spröde) |
| Vergleichs -beispiel 1 | 10 | Kraton 1651 G | 178 | 35 (zäh) | 15 (spröde) |
| Vergleichs -beispiel 2 | 0 | - | 185* | 11 (spröde)* | 11 (spröde)* |

| | | | | | |
|---|---|---|---|---|---|
| * laut Datenblatt Bayer MaterialScience AG | | | | | |

Durch Zusatz der Elastomere (Beispiele 1-4, Vergleichsbeispiel 1) konnte in allen Fällen die hohe Wärmeformbeständigkeit erhalten werden (Vicat-Erweichungstemperatur >165°C) und mechanische Eigenschaften (Kerbschlagzähigkeit) auf einem vergleichbaren Niveau erhalten, relativ zum Ausgangsmaterial (Vergleichsbeispiel 2) sogar verbessert werden (Tabelle 3).

Aus den Beispielmaterialien wurden Folien mit einer Dicke von 100 µm (Basismaterial hergestellt in Compoundierung A, Folienextrusion A) und 250 µm (Basismaterial hergestellt in Compoundierung B, Folienextrusion B) über oben beschriebene Verfahren hergestellt. An diesen Folien wurden die Doppelfalzzahlen nach Schopper bestimmt (siehe Tabelle 4, Tabelle 5).

**Tabelle 4: Doppelfalzzahlen, bestimmt an 100 µm-Folien**

| Prüfungen an 100 µm-Folien | Beispiel 1 | Beispiel 2 | Beispiel 3 | Beispiel 4 | Vergleichsbeispiel 1 |
|---|---|---|---|---|---|
| Doppelfalzzahl nach Schopper (parallel zur Extrusionsrichtung) | 4677 | 4531 | 3797 | 3810 | 582 |

**Tabelle 5: Doppelfalzzahlen, bestimmt an 250 µm-Folien**

| Prüfungen an 250 µm-Folien | Beispiel 1 | Beispiel 2 | Vergleichsbeispiel 2 |
|---|---|---|---|
| Doppelfalzzahl nach Schopper (parallel zur Extrusionsrichtung) | 64,0 | 74,5 | 21,9 |
| Doppelfalzzahl nach Schopper (quer zur Extrusionsrichtung) | 83,6 | 160 | 17,0 |

Wie in den Beispielen gezeigt, führt nur die Einbringung der Ethylen-Alkylacrylat-Elastomeren zu einer Verbesserung der Wechselbiegefestigkeit, hier nachgewiesen durch eine signifikante Erhöhung der Doppelfalzzahl nach Schopper, unter gleichzeitiger Beibehaltung der Wärmeformbeständigkeit und der Kerbschlagzähigkeit bei Raumtemperatur und bei -30°C. Dieser Effekt tritt nicht ein mit einem anderen elastomeren Ethylen-Copolymer (Vergleichsbeispiel 1) und bei dem unmodifizierten hochtemperaturbeständigen Polycarbonat allein (Vergleichsbeispiel 2).

## Patentansprüche

1. Folie aus Polycarbonatzusammensetzung enthaltend:
A) 82 - 99,5 Gew-% (bezogen auf die Summe der Gewichtsteile der Komponenten A+B) wenigstens eines hochwärmeformbeständiges Polycarbonat auf Basis von einem oder mehreren cycloaliphatischen Bisphenolen der Formel 1, 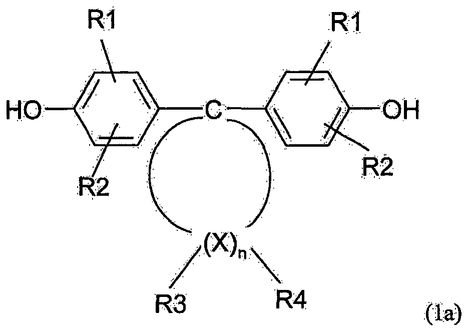 worin
R1 und R2 unabhängig voneinander Wasserstoff, Halogen, C1-C8-alkyl, C5-C6 - cycloalkyl, Phenyl, C7-C12 Aralkyl,
n eine ganze Zahl von 4 - 7 ist,
R3 und R4 für jedes X individuell wählbar sind und unabhängig voneinander Wasserstoff oder C1-C6-Alkyl bedeuten und
X Kohlenstoff bedeutet,
mit der Maßgabe, dass an mindestens einem Atom X R3 und R4 gleichzeitig Alkyl, bedeuteten;
und
B) 0,5 - 18 Gew-% (bezogen auf die Summe der Gewichtsteile der Komponenten A+B) wenigstens eines Ethylen-Alkylacrylat-Block-Copolymers.

2. Folie aus Polycarbonatzusammensetzung gemäß Anspruch 1, **dadurch gekennzeichnet, dass** R1 und R2 unabhängig voneinander Chlor, Brom, Methyl, Phenyl oder H bedeuten, n 4 oder 5 ist.

3. Folie aus Polycarbonatzusammensetzung gemäß Anspruch 1 oder 2, **dadurch gekennzeichnet, dass** als Komponente A Copolycarbonate aus Bisphenol A und Bisphenol TMC verwendet werden.

4. Folie aus Polycarbonatzusammensetzung gemäß einem der Ansprüche 1 bis 3, **dadurch gekennzeichnet, dass** die Zusammensetzung 89 - 99 Gew.-Teile Komponente A und 1 - 11 Gew.-Teile Komponente B (jeweils bezogen auf die Summe der Gewichtsteile der Komponenten A+B) enthält.

5. Folie aus Polycarbonatzusammensetzung gemäß einem der Ansprüche 1 bis 4, **dadurch gekennzeichnet, dass** als Komponente B Ethylen-Alkyl(meth)acrylat-Block-Copolymere der allgemeinen Formel (4) verwendet werden: 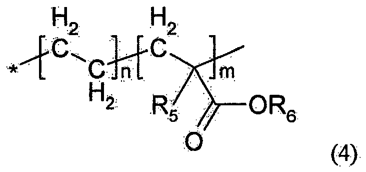 worin:
R₅ Methyl oder Wasserstoff ist,
R₆ Wasserstoff oder C₁ bis C₁₂ Alkylrest ist,
n und m Polymerisationsgrade sind.

6. Folie aus Polycarbonatzusammensetzung gemäß Anspruch 5, **dadurch gekennzeichnet, dass** R₆ Methyl, Ethyl, Propyl, Isopropyl, Butyl, sec-Butyl, tert-Butyl, Isobutyl, Hexyl, Isoamyl, oder tert-Amyl ist.

7. Folie aus Polycarbonatzusammensetzung gemäß einem der Ansprüche 5 oder 6, **dadurch gekennzeichnet, dass** die Verhältnisse der Polymerisationsgrade n und m im Bereich von n : m = 1:300 - 90:10 liegen.

8. Folie aus Polycarbonatzusammensetzung gemäß einem der Ansprüche 1 bis 7, **dadurch gekennzeichnet, dass** 0 bis 5 Gew.-Teile (bezogen auf die Summe der Gewichtsteile der Komponenten A+B) Zusatzstoffe (Komponente C) in der Zusammensetzung enthalten sind.

9. Verwendung von Folien aus Polycarbonatzusammensetzung gemäß einem der Ansprüche 1 bis 8 im Elektrosektor und für Autositze.

## Claims

1. Film of polycarbonate composition containing:
A) 82-99.5% by weight (based in each case on the sum of the parts by weight of the components A+B) of at least one polycarbonate having high heat distortion resistance and based on one or more cycloaliphatic bisphenols of the formula 1 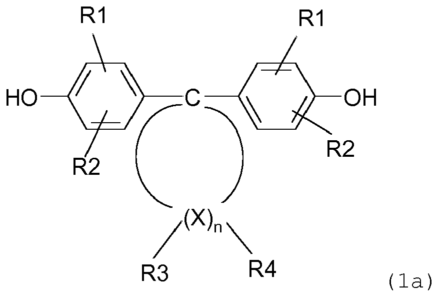 in which
R1 and R2, independently of one another, denote hydrogen, halogen, C₁-C₈-alkyl, C₅-C₆-cycloalkyl, phenyl, C₇-C₁₂-aralkyl,
n is an integer from 4 to 7,
R3 and R4 are selectable for each X individually and, independently of one another, denote hydrogen
or C₁-C₆-alkyl and
X denotes carbon,
with the proviso that, on at least one atom X, R3 and R4 simultaneously denote alkyl;
and
B) 0.5-18% by weight (based in each case on the sum of the parts by weight of the components A+B) of at least one ethylene-alkyl acrylate block copolymer.

2. Film of polycarbonate composition according to Claim 1, **characterized in that** R1 and R2, independently of one another, denote chlorine, bromine, methyl, phenyl or H, n is 4 or 5.

3. Film of polycarbonate composition according to Claim 1 or 2, **characterized in that** copolycarbonates of bisphenol A and bisphenol TMC are used as component A.

4. Film of polycarbonate composition according to any of Claims 1 to 3, **characterized in that** the composition contains 89-99 parts by weight of component A and 1-11 parts by weight of component B (based in each case on the sum of the parts by weight of the components A+B).

5. Film of polycarbonate composition according to any of Claims 1 to 4, **characterized in that** ethylene-alkyl (meth)acrylate block copolymers of the general formula (4) are used as component B: 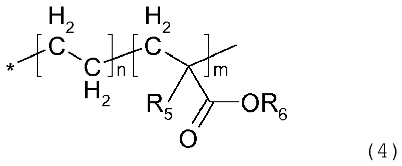 in which:
R₅ is methyl or hydrogen,
R₆ is hydrogen or C₁ to C₁₂ alkyl radical,
n and m are degrees of polymerization.

6. Film of polycarbonate composition according to Claim 5, **characterized in that** R₆ is methyl, ethyl, propyl, isopropyl, butyl, sec-butyl, tert-butyl, isobutyl, hexyl, isoamyl or tert-amyl.

7. Film of polycarbonate composition according to either of Claims 5 and 6, **characterized in that** the ratios of the degrees of polymerization n and m are in the range of n:m = 1:300-90:10.

8. Film of polycarbonate composition according to any of Claims 1 to 7, **characterized in that** 0 to 5 parts by weight (based on the sum of the parts by weight of the components A+B) of additives (component C) are present in the composition.

9. Use of films of polycarbonate composition according to any of Claims 1 to 8 in the electrical sector and for automobile seats.

## Revendications

1. Film en une composition de polycarbonate, contenant :
A) 82 à 99,5 % en poids (par rapport à la somme des parties en poids des composants A+B) d'au moins un polycarbonate présentant une stabilité dimensionnelle à la chaleur élevée, à base d'un ou de plusieurs bisphénols cycloaliphatiques de formule I 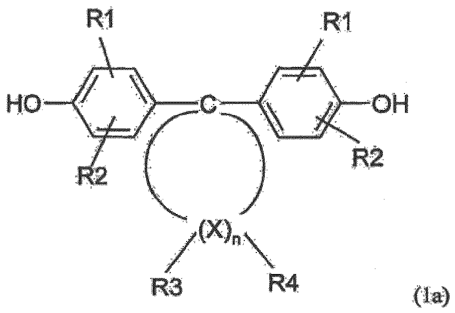 dans laquelle
R1 et R2 représentent indépendamment l'un de l'autre hydrogène, halogène, alkyle en C1-C8, cycloalkyle en C5-C6, phényle, aralkyle en C7-C12,
n est un nombre entier de 4 à 7,
R3 et R4 peuvent être choisis individuellement pour chaque X et signifient indépendamment l'un de l'autre
hydrogène ou alkyle en C1-C6, et
X signifie carbone,
à condition que, sur au moins un atome X, R3 et R4 signifient simultanément alkyle ;
et
B) 0,5 à 18 % en poids (par rapport à la somme des parties en poids des composants A+B) d'au moins un copolymère séquencé d'éthylène-acrylate d'alkyle.

2. Film en une composition de polycarbonate selon la revendication 1, **caractérisé en ce que** R1 et R2 signifient indépendamment l'un de l'autre chlore, brome, méthyle, phényle ou H, n représente 4 ou 5.

3. Film en une composition de polycarbonate selon la revendication 1 ou 2, **caractérisé en ce que** des copolycarbonates de bisphénol A et de bisphénol TMC sont utilisés en tant que composant A.

4. Film en une composition de polycarbonate selon l'une quelconque des revendications 1 à 3, **caractérisé en ce que** la composition contient 89 à 99 parties en poids de composant A et 1 à 11 parties en poids de composant B (à chaque fois par rapport à la somme des parties en poids des composants A+B).

5. Film en une composition de polycarbonate selon l'une quelconque des revendications 1 à 4, **caractérisé en ce que** des copolymères séquencés d'éthylène-(méth)acrylate d'alkyle de formule générale (4) : 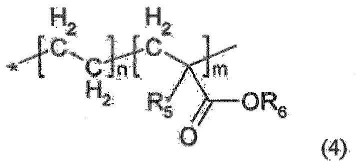 dans laquelle
R₅ représente méthyle ou hydrogène,
Rr, représente hydrogène ou un radical alkyle en C₁ à C₁₂, n et m sont des degrés de polymérisation,
sont utilisés en tant que composant B.

6. Film en une composition de polycarbonate selon la revendication 5, **caractérisé en ce que** R₆ représente méthyle, éthyle, propyle, isopropyle, butyle, sec-butyle, tert-butyle, isobutyle, hexyle, isoamyle ou tert-amyle.

7. Film en une composition de polycarbonate selon l'une quelconque des revendications 5 ou 6, **caractérisé en ce que** le rapport entre les degrés de polymérisation n et m se situe dans la plage n:m = 1:300 à 90:10.

8. Film en une composition de polycarbonate selon l'une quelconque des revendications 1 à 7, **caractérisé en ce que** 0 à 5 parties en poids (par rapport à la somme des parties en poids des composants A+B) d'additifs (composant C) sont contenues dans la composition.

9. Utilisation de films en une composition de polycarbonate selon l'une quelconque des revendications 1 à 8 dans le secteur électrique et pour les sièges automobiles.
